# EUROPEAN PATENT SPECIFICATION

(11) **EP 3 527 476 B1**
(45) Date of publication and mention of the grant of the patent: **07.10.2020**
(21) Application number: 18157607.5
(22) Date of filing: 20.02.2018
(51) Int. Cl.: B62M 6/50, B62M 9/127, B62M 9/137, B62M 25/04

(54) **METHOD AND SYSTEM FOR THE MONITORING OF ELECTRIC BICYCLE MANUAL GEAR CHANGING**
VERFAHREN UND SYSTEM ZUR ÜBERWACHUNG DER MANUELLEN GANGSCHALTUNG EINES ELEKTRISCHEN FAHRRADS
PROCÉDÉ ET SYSTÈME DE SURVEILLANCE DE CHANGEMENT MANUEL DE VITESSES POUR BICYCLETTE ÉLECTRIQUE

(43) Date of publication of application: 21.08.2019
(73) Proprietor: Agentura REPRO spol. s r.o., 56151 Letohrad (CZ)
(72) Inventor: Mráz, Richard, 56165 Jamné nad Orlicí (CZ)
(74) Representative: Sedlák, Jirí

(56) References cited:
- DE-U1-202013 008 313
- US-A- 5 903 214
- US-A1- 2016 272 277

## Description

### Field of the Invention

The present invention relates to the method and system for the monitoring of electric bicycle manual gear changing that includes the indication of the engaged gear and the calibration of the monitoring during which gear changing is activated by the user.

### Background of the Invention

Bicycle gearing is realized by gears and pinions. Gears are toothed wheels transmitting mechanical energy supplied by pedalling onto the chain that have their rotation axis in the central axis of the bicycle hub. Gears are usually formed by three toothed wheels, so-called plates, with different values of diameter and a different number of teeth that are arranged next to each other by size. Pinions are toothed wheels as well with different values of diameter and a different number of teeth with a common rotation axis identical with the rotation axis of the rear wheel of the bicycle that are arranged next to each other by size. Pinions are assembled in a solid case. Usually, there are three to eleven toothed wheels in the case.

Changing gears in a bicycle is done by the front shifting element, a so-called shifter, that is used for shifting the chain onto the next gear, and by the rear shifting element, a so-called derailleur, that is used for shifting the chain onto another pinion in the case.

To control the shifter and derailleur the bicycle is equipped by the manual gear changing mechanism usually consisting of manually operated levers or manually operated turning handles that can be attached to the handlebar of the bicycle or alternatively onto the frame of the bicycle. A change in the settings of the levers or turning handles is transmitted to the shifters and derailleurs by Bowden cables.

A Bowden cable comprises a flexible housing inside which a solid core moves. The housing is usually made of a steel spiral covered by a plastic sleeve. Inside the housing there is a steel cable or steel wire.

An electric bicycle differs from a normal bicycle by an electric motor supplying mechanical energy necessary for riding. The electric motor either completely replaces mechanical energy generated by pedalling, or contributes to mechanical energy acquired by pedalling to make riding more comfortable. Another item of the electric bicycle equipment is a source of power for the electric motor and at least one control unit to control the operation of the electric motor when the electric bicycle is ridden.

Disadvantages of electric bicycles include the fact that with manual gear changing the electric motor needs to be disengaged to eliminate damage to the shifters, derailleurs, chains, gears and pinions by forces exerted by the electric motor. When the user changes gears, he/she intuitively slows down pedalling until the gear has been changed. It is not possible for the user who is riding an electric bicycle to engage and disengage the electric motor and change gears manually at the same time.

For the aforementioned reason, the invention known from the European patent application EP 2 739 523 (A1) was invented. The invention discloses the possibility for the monitoring of the movement of the core of the Bowden cable interconnecting the manual gear changing mechanism and the shifter or derailleur for an automatically created instruction to disengage the electric motor. The Bowden cable is equipped with a sensor inside which the Bowden cable core is exposed and its linear movement monitored. When the core of the Bowden cable starts moving during manual electric bicycle gear changing, an electric signal is sent to the electric motor control unit which disengages the electric motor on a temporary basis.

Disadvantages of the aforementioned solution include the fact that the invention is used only for the detection of the Bowden cable core movement and does not make it possible to identify and indicate the gear based on the monitored movement.

The problem of the gear indication is resolved by the invention disclosed in the patent application JP 2012 116 227 (A), where the core of the Bowden cable exposed inside the sensor is imaginarily divided into a number of segments whose displacement relative to a reference point is scanned. The engaged gear is identified subsequently from the indicated displacement. Disadvantages of this invention rest in the fact that due to the wear and tear of the components or, for example, due to the user's intervention, the position of the imaginary segments relative to the reference point can become shifted and the equipment according to the invention ceases to work properly. The equipment according to the invention needs to be recalibrated which usually exceeds to scope of the user's skills and the electric bicycle needs to be serviced by a professional service provider.

From the document DE 20 2013 008313 U1 is known technical solution, which uses a rotary pulley rolling on the exposed core of the Bowden cable guided between manual gear changing mechanism and the derailleur. This document discloses the preambles of claims 1 and 4.

The task of the invention is to create the method and system for the monitoring of electric bicycle manual gear changing which would allow the engaged gear indication and simple calibration for the correct operation of the monitoring system to be performed in addition to the generation of a signal needed for the electric motor operation adjustment.

### Summary of the Invention

The set goal has been worked out by inventing the method and system for the monitoring of electric bicycle manual gear changing.

Within the framework of the method of the electric bicycle manual gear changing monitoring at first the Bowden cable core in at least part of the Bowden cable interconnecting the manual gear changing mechanism with the shifter or derailleur is made accessible to allow the Bowden cable core movement to be detected. Then, based on the detected Bowden cable core movement, an electric signal providing information on a change in the engaged gear of the electric bicycle is generated. The signal is sent to the control unit of the electric motor for the adjustment of the electric motor operation. Is the fact that the linear movement of the Bowden cable core is converted into circular movement which becomes the basis of the detection of a change in the electric bicycle gears. At the same time, the angular travel of circular movement is scanned and its scanned change becomes the basis of the indication of the currently engaged electric bicycle gear. The conversion of linear movement into circular movement makes it possible to use new scanning elements which are inappropriate for the scanning of linear movement allowing gear indication or susceptible to operating errors.

The essence of the invention rests in the conversion of linear movement into circular movement which is preferred due to the fact that the detection of a change in angular travel is calibrated by means of gear gradual engagement, starting with the first up to the last one, where for each engaged gear the value of the change in angular travel is recorded in a database of the values of angular travels for individual gears. The advantage is that in the case of moderate wear and tear of manual gear changing mechanism components, e.g. the core inside the Bowden cable housing can be displaced. If the Bowden cable core were monitored, for example by dividing it into individual segments inside the sensor, the positions of the segments would become disarranged, which would result in a monitoring error. On the other hand, if the core of the Bowden cable is displaced, a simple calibration, where the user gradually engages the gears, starting with the first in the row up to the last one, which does not require the system to be dismantled or serviced by a specialist service provider, is preferred.

It is recommended that information on the current value of the change in angular travel for the respective gear be saved in the database of angular travel values for individual gears. By doing this, the invention is able to adapt to physical changes caused by, for example, the wear and tear of the manual gear changing mechanism components on a continuous basis.

A preferred embodiment of the invention converts linear movement into circular movement using a rotary pulley, the circumference of at least part of which is in contact with the exposed Bowden cable core whose linear movement makes the rotary pulley rotate. The solution utilizing a rotary pulley is very simple in terms of design as well as reliable and undemanding in terms of servicing.

The disclosed invention also includes the system for the monitoring of electric bicycle manual gear changing. The system comprises at least one sensor arranged at the Bowden cable interconnecting the manual gear changing mechanism with the shifter or derailleur where in the place where the Bowden cable is arranged the Bowden cable core is at least partly exposed. The system also includes a control unit that controls the electric motor operation and that is either by wire or wirelessly interconnected with the sensor for the reception of electric signals from the sensor. The sensor is equipped with at least one rotary pulley whose circumference is in contact with at least part of the exposed Bowden cable core to convert the linear movement of the core into circular movement, where the sensor includes at least one scanning element for scanning a change in the angular travel of the circular movement. Provision of the pulley rolling away movement from the Bowden cable core is simple in terms of design and very reliable in terms of operation. The design of the sensor equipped with a rotary pulley is easy, inexpensive and preferred as well.

The essence of the invention rests in the fact that the control unit is equipped with a data storage device comprising a database recording the values of angular travels for individual gears and with at least one software calibration module. The control unit refers to an electronic device the task of which is to adjust the operation of the electric motor. It is advisable to utilize the control unit data storage device for downloading the database of the values of angular travels for individual gears and the software calibration module. The database of the values of angular travels for individual gears, the software calibration module and the sensor's design allow an easy and time-saving calibration that can be performed by the user without any technical support.

The system can be preferably installed with an integrated calibration unit which can be equipped with a data storage device comprising a database recording the values of angular travel for individual gears and with at least one software calibration module. If it is not possible or desirable to use the existing control unit, the system can be equipped with an integrated calibration unit.

The system according to the invention is preferably equipped with at least one indicating element showing the currently engaged gear. The indication of the gear being used available to the user of the electric bicycle improves the comfort related to riding.

Among the advantages of the invention are reliability and simplicity. The invention allows the user to perform easy calibration which is time-saving and technically undemanding. In addition, the invention allows the indication of engaged gears ascertained directly from the manual gear changing mechanism, not by an indirect estimate from the control unit based on the electric motor operating data.

### Explanation of Drawings

The present invention will be explained in detail by means of the following figures where:
Fig. 1 provides a schematic diagram of the electric bicycle.
Fig. 2 provides an exploded-view drawing of the sensor with the rotary pulley.

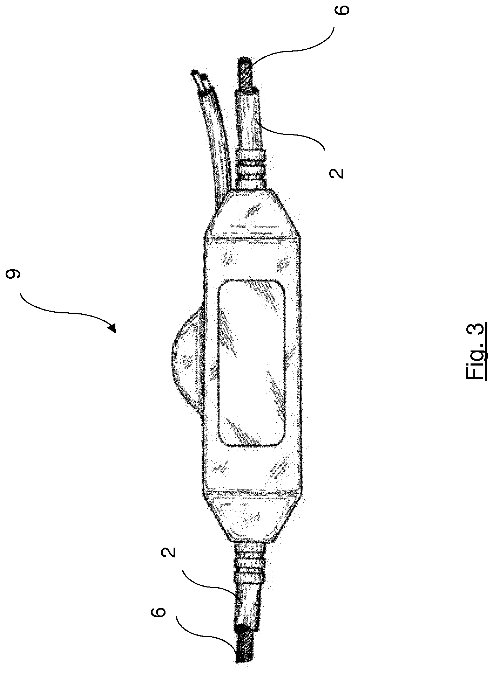

Fig. 3 provides a drawing of the sensor.

### An Example of the Invention Embodiment

It shall be understood that the specific cases of the invention embodiments described and depicted below are provided for illustration only and do not limit the invention to the examples provided here. Those skilled in the art will find or, based on routine experiment, will be able to provide a greater or lesser number of equivalents to the specific embodiments of the invention which are described here. Also such equivalents will be included in the scope of the following patent claims.

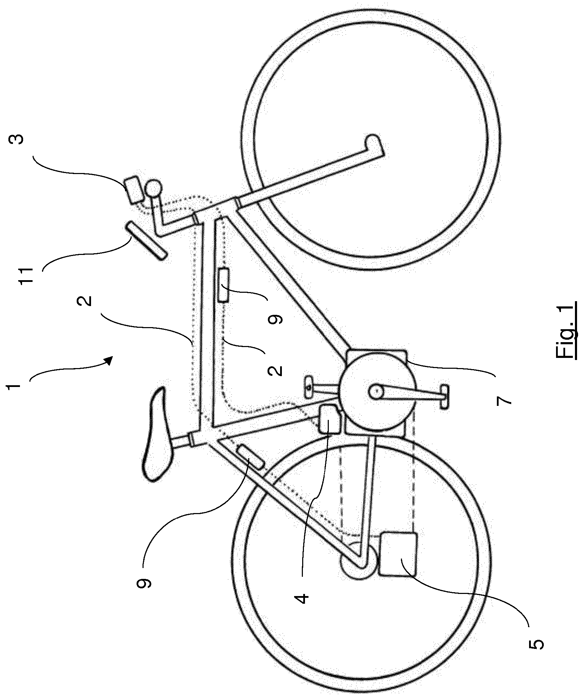

Fig. 1 provides a schematic diagram of the electric bicycle **1.** The design of the electric bicycle **1** is based on that of a standard bicycle with the difference that it is equipped with a supplementary source of mechanical energy, the electric motor **7** in this case. For the purposes of the invention embodiment, Fig. 1 highlights the important components of the electric bicycle which are used for the explanation of the invention. A person skilled in the field of electric bicycles **1** will be able to supplement components not provided in the figure such as batteries, lights, mudguards, cabling, etc. as part of their routine work. Such components of the electric bicycle **1** which are not important for the explanation of the invention are omitted in the following description.

The gear of the electric bicycle **1** is set by the shifter **4** and derailleur **5.** The shifter **4** and derailleur **5** are controlled by the manual gear changing mechanism **3** that is usually attached to the handlebar of the electric bicycle **1,** sometimes even directly in the handles of the handlebar, and operated by the user's fingers. The manual gear changing mechanism **3** is interconnected with the shifter **4** and derailleur **5** using the Bowden cables **2** not provided in Fig. 1. The Bowden cables **2** are led along the frame of the electric bicycle **1** and each Bowden cable **2** is equipped with the sensor **9** for the implementation of the monitoring of a change in the gears of the electric bicycle **1.** The electric bicycle **1** is also equipped with the indicating element **11** for the indication of the currently engaged gear. The indicating element **11** comprises an electronic device equipped with a display on which information on the engaged gear is provided.

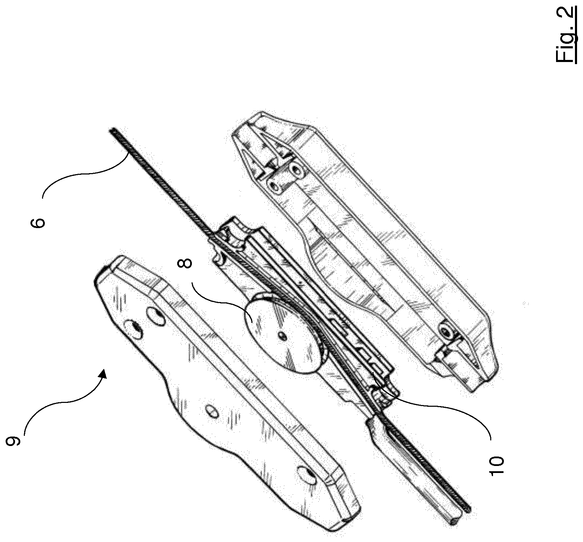

Fig. 2 provides an exploded-view drawing of the sensor **9** that is equipped with the rotary pulley **8.** The Bowden cable **2** consisting of the movable core **6** inside the housing enters the sensor **9.** Inside the sensor **9** the core **6** is exposed and is in contact with the rotary pulley **8.** When the core **6** of the Bowden cable **2** moves linearly, the rotary pulley **8** rotates. The scanning element **10** scans the rotary pulley **8** and as it rotates, i.e. in the case of a change in angular travel, the scanning element generates an electric signal corresponding to gear changing. The scanning element **10** can refer to, for example, a magnetic transducer or optical scanner, etc. A person skilled in the field of sensor design will be able to design, based on routine work, a number of other options for the scanning element **10**.

In one of possible invention embodiments, the rotary pulley **8** is magnetic with a nylon ring pressed onto the outer circumference of the rotary magnetic pulley **8.** The nylon ring has a groove in the shape of letter V for the exposed core **6** of the Bowden cable **2** of the shifter **4** or derailleur **5.**

Rotation of the rotary pulley **8** with the nylon ring along the outer circumference is monitored by the scanning element **10** realized as the magnetic field sensor located on a printed circuit board, specifically in the position above the magnetic pulley **8.** Movement of the pulley **8,** i.e. during changing gears, generates a signal that is subsequently processed in the control unit of the electric motor **7.** The resulting signal allows the control unit to display the position of the engaged gear on the indicating element **11,** which means, for example, on the power unit display or controller, and to calculate the variable value of the time of disengagement of, or that of reduction in the output of the electric motor **7** at the moment of changing gears, specifically depending on diameter values of the pinions in combination with the derailleur **5** and those of the multi-gears in combination with the shifter **4.** The aforementioned variable value of the time of disengagement of, or that of reduction in the output of the electric motor **7** is preferred considering the fact that the chain needs different times to complete its shifting to a pinion or gear with a different diameter, while respecting a principle that the larger diameter or the number of teeth, the longer time, and vice versa.

The result is then the optimal time of disengagement of or reduction in the output of the electric motor **7** in the course of changing gears eliminating excessive disengagement of/reduction in the output of the electric motor **7.** A too short disengagement where the electric motor **7** would start providing support before the changing gears operation has been completed is excluded as the signal is active over the entire period when the core **6** of the Bowden cable **2** controlling the changing gears operation is moving.

The rotary pulley **8** never leaves its position thanks to its circular movement regardless of the distance travelled by the core **6** of the Bowden cable **2.** On the other hand, if the position of the core **6** has changed due to component replacement or wear and tear or due to the electric bicycle user's intervention, calibration is very simple. The data storage device of the control unit, or an independent calibration unit comprised of an electronic device, includes a software calibration module and a database of the values of angular travels for individual gears. The control unit is switched over to the calibration mode by the controller of the electric motor **7,** which means that the software calibration module in the control unit is activated. Subsequently, the whole scale of the gears of the derailleur **4** and those of the shifter **5** is changed, and the control unit saves the values of the magnetic field coding information on change in circular movement angular travel into the database for individual gears, and this data is then used for controlling the variable values of disengagement of, or reduction in the output of the electric motor **7** in the course of the gear changing operation and also for displaying the gear on the indicating element **11** in a manner described above.

Another functionality of the invention is the software based automatic recalibration not requiring the user's intervention that is based on the fact that at any change the control unit continuously compares the saved values of the magnetic field of the magnetic rotary pulley **8** acquired from the initial calibration with the current value of the magnetic field of each gear. If a deviation is found, the respective gear is automatically assigned a new value of magnetic field.

### Industrial Applicability

The method and system for the monitoring of electric bicycle manual gear changing will be used in transport realized by electric bicycles.

### Overview of the positions

- 1: Electric bicycle
- 2: Bowden cable
- 3: Manual gear changing (mechanism)
- 4: Shifter
- 5: Derailleur
- 6: Bowden cable core
- 7: Electric motor
- 8: Rotary pulley
- 9: Sensor
- 10: Scanning element
- 11: Indicating element

## Claims

1. The method for the monitoring of manual gear changing of the electric bicycle (1), within the framework of which in at least part of the length of the Bowden cable (2) interconnecting the manual gear changing mechanism (3) with the shifter (4), or with the derailleur (5), the core (6) of the Bowden cable (2) is exposed to allow detection of the core (6) movement, where subsequently together with the detected movement of the core (6) of the Bowden cable (2) an electric signal bearing information on a change in gears of the electric bicycle (1) is generated and sent to the control unit of the electric motor (7) for the adjustment of the operation of the electric motor (7) in the course of changing gears of the electric bicycle (1), and the linear movement of the core (6) of the Bowden cable (2) is converted into circular movement from which a change in gears of the electric bicycle (1) is detected, **characterized in that** at the same time the angular travel of the circular movement is scanned with the subsequent indication of the currently engaged gear of the electric bicycle (1) based on the scanned change in the angular travel of the circular movement, wherein the angular travel scanning is calibrated by means of a gradual engagement of the gears starting with the first up to the last one where for each engaged gear the value of the change in angular travel is recorded in a database of angular travel values for individual gears.

2. The method according to patent claim 1, **characterized in that** the value of angular travel in the database is updated upon any change in gears by the values of angular travels for individual gears.

3. The method according to patent claim 1 or 2, **characterized in that** the linear movement is converted into circular movement using a rotary pulley (8) the circumference of at least part of which is in contact with the exposed core (6) of the Bowden cable (2) to make it rotate due to the linear movement of the core (6).

4. The system for the monitoring of the manual gear changing of the electric bicycle (1) in the manner according to the method of any of patent claims 1 through 3 including at least one sensor (9) arranged at the Bowden cable (2) interconnecting the manual gear changing mechanism (3) with the shifter (4), or with the derailleur (5), where in the place where the sensor (9) is arranged the core (6) of the Bowden cable (2) is at least partly exposed, and also including a control unit to control the operation of the electric motor (7), which is, either by wire, or wirelessly, interconnected with the sensor (9) for the reception of an electric signal sent by the sensor (9), and the sensor (9) is equipped with at least one rotary pulley (8) whose circumference is in contact with at least part of the exposed core (6) of the Bowden cable (2) for the conversion of the linear movement of the core (6) of the Bowden cable (2) into circular movement with the sensor (9) being equipped with at least one scanning element (10) to scan changes in the angular travel of the circular movement **characterized in that** the control unit is equipped with a data storage device comprising a database of the values of angular travels for individual gears and with at least one software calibration module.

5. The system according to patent claim 4, **characterized in that** it comprises a calibration unit equipped with a data storage device comprising a database of the values of angular travels for individual gears and with at least one software calibration module.

6. The system according to patent claim 4 or 5, **characterized in that** it is equipped with at least one indicating element (11) to display the currently engaged gear.

## Patentansprüche

1. Verfahren zur Überwachung des manuellen Gangwechsels eines Elektrofahrrads (1), wo in diesem Rahmen auf mindestens einem Teil der Länge des Bowdenzugs (2), der den manuellen Gangwechselmechanismus (3) mit dem Schalthebel (4) oder mit der Gangschaltung (5) verbindet, der Zugseil (6) des Bowdenzugs (2) freigelegt ist, um die Bewegung des Zugseiles (6) erfassen zu können, und wo anschließend zusammen mit der erfassten Bewegung des Zugseiles (6) des Bowdenzugs (2) ein elektrisches Signal erzeugt wird, das Informationen über einen Gangwechsel des Elektrofahrrads (1) enthält und diese an die Steuereinheit des Elektromotors (7) zur Einstellung der Betriebsart des Elektromotors (7) beim Gangwechsel des Elektrofahrrads (1) sendet, wobei die lineare Bewegung des Zugseils (6) des Bowdenzugs (2) in eine kreisförmige Bewegung umgewandelt wird, durch die ein Gangwechsel des Elektrofahrrads (1) festgestellt wird, **dadurch gekennzeichnet, dass** dabei gleichzeitig eine Abtastung der Winkelstrecke der Kreisbewegung stattfindet, und dass anschließend eine Anzeige des aktuell eingeschalteten Zahnrads des Elektrofahrrads (1) erfolgt, basierend auf der abgetasteten Änderung der Winkelstrecke der Kreisbewegung, wobei der Abtastvorgang der Winkelstrecke kalibriert wird, und zwar durch ein allmähliches Ineinandergreifen der Zahnräder, beginnend mit dem ersten bis zum letzten, wobei für jedes eingelegte Zahnrad der Wert der Änderung der Winkelstrecke in einer Datenbank von Winkelstreckenwerten für einzelne Zahnräder aufgezeichnet wird.

2. Verfahren nach Anspruch 1, **dadurch gekennzeichnet, dass** der Wert der Winkelstrecke in der Datenbank bei jeder Änderung der Gänge und Änderung der Werte entsprechend Winkelstrecken einzelner Gänge aktualisiert wird.

3. Verfahren nach Anspruch 1 oder 2, **dadurch gekennzeichnet, dass** die lineare Bewegung mittels Verwendung einer rotierenden Rolle (8) in eine kreisförmige Bewegung umgewandelt wird, deren Umfang mindestens teilweise mit dem freiliegenden Zugseil (6) des Bowdenzugs in Kontakt (2) steht, um aufgrund der linearen Bewegung des Zugseiles (6) eine Drehbewegung der Rolle auszulösen.

4. System zur Überwachung des manuellen Gangwechsels des Elektrofahrrads (1) nach dem Verfahren eines der Ansprüche 1 bis 3, das mindestens einen Sensor (9) besitzt, der sich auf dem Bowdenzug (2) befindet, der den manuellen Gangwechselmechanismus (3) mit dem Schalthebel (4) oder mit der Gangschaltung (5) verbindet, wobei an der Stelle, an der sich der Sensor (9) befindet, der Zugseil (6) des Bowdenzug (2) zumindest teilweise freigelegt und mit einer Steuereinheit zur Steuerung der Betriebsart des Elektromotors (7) versehen ist, die entweder durch einen Leiter-Anschluss oder drahtlos mit dem Sensor (9) zum Empfang eines vom Sensor (9) gesendeten elektrischen Signals verbunden ist, wobei der Sensor (9) mit mindestens einer rotierenden Rolle (8) ausgestattet ist, deren Außen umfang mindestens einen Teil des freiliegenden Zugseiles (6) des Bowdenzug (2) berührt, um die lineare Bewegung des Zugseiles (6) des Bowdenzugs (2) in eine Kreisbewegung umzuwandeln, wobei der Sensor (9) mit mindestens einem Abtastelement (10) ausgerüstet ist, um Änderungen in der Winkeldrehung während der Kreisbewegung abzutasten, **dadurch gekennzeichnet, dass** die Steuereinheit mit einer Datenspeichervorrichtung ausgerüstet ist, die eine Datenbank der Werte der Winkelstrecken für einzelne Gänge und mindestens ein Software-Kalibriermodul umfasst.

5. System nach Anspruch 4, **dadurch gekennzeichnet, dass** es eine Kalibriereinheit umfasst, die mit einer Datenspeichervorrichtung ausgestattet ist, welche eine Datenbank der Werte der Winkelstrecken für einzelne Gänge und mindestens ein Software-Kalibriermodul umfasst.

6. System nach Anspruch 4 oder 5, **dadurch gekennzeichnet, dass** es mindestens ein Anzeigeelement (11) besitzt, das den aktuell eingeschalteten Gang anzeigt.

## Revendications

1. Procédé de surveillance du changement de vitesse manuel du vélo électrique (1), dans le cadre duquel au moins une partie de la longueur du câble Bowden (2), reliant le mécanisme de changement de vitesse manuel (3) avec le levier de vitesses (4)), ou avec le dérailleur (5), où l'âme (6) du Bowden (2) est librement accessible pour permettre la détection du mouvement de l'âme (6), où ensuite, ensemble avec le mouvement détecté de l'âme (6) du câble Bowden (2) un signal électrique portant des informations sur le changement de vitesse du vélo électrique (1) est généré et envoyé à l'unité de commande du moteur électrique (7) pour le réglage de fonctionnement du moteur électrique (7) au cours du changement de vitesse du vélo électrique (1), et le mouvement linéaire de l'âme (6) du câble Bowden (2) est converti en mouvement circulaire à partir duquel le changement de vitesse du vélo électrique (1) est détecté, **caractérisé en ce, qu'**en même temps, la course angulaire du mouvement circulaire est détecté avec l'indication ultérieure de la vitesse actuellement engagée du vélo électrique (1) sur la base du changement détecté de la course angulaire du mouvement circulaire, où la détection de déplacement angulaire est calibré au moyen d'un engagement progressif des engrenages commençant de la première et se terminant par la dernière vitesse, où pour chaque engrenage engagé, la valeur du changement de déplacement angulaire est enregistrée dans une base de données des valeurs de déplacement angulaire pour des engrenages individuels.

2. Procédé selon la revendication 1, **caractérisé en ce, que** la valeur de déplacement angulaire dans la base de données est actualisée lors de tout changement de vitesse par les valeurs de course angulaire pour les engrenages individuels.

3. Procédé selon la revendication 1 ou 2, **caractérisé en ce, que** le mouvement linéaire est converti en mouvement circulaire à l'aide d'une poulie rotative (8) dont la circonférence au moins d'une partie est en contact avec l'âme exposée (6) du câble Bowden (2), pour le faire tourner en raison du mouvement linéaire de l'âme (6).

4. Système pour la surveillance du changement de vitesse manuel de la bicyclette électrique (1) de la manière selon le procédé de l'une quelconque des revendications de brevet 1 à 3 comprenant au moins un détecteur (9) arrangé au niveau du câble Bowden (2), reliant le mécanisme de changement de vitesse manuel (3) avec le levier de vitesses (4), ou avec le dérailleur (5), où à l'endroit où le capteur (9) est arrangé, l'âme (6) du câble Bowden (2) est au moins en partie librement accessible, et comprenant également une unité de commande pour commander le fonctionnement du moteur électrique (7), qui est relié soit par un conducteur, soit sans fil, avec le détecteur (9) pour la réception d'un signal électrique émis par le détecteur (9), et où le détecteur (9) est équipé au moins d'une poulie rotative (8) dont la circonférence est en contact avec au moins une partie de l'âme exposée (6) du câble Bowden (2) pour la conversion du mouvement linéaire de l'âme (6) du câble Bowden (2) en mouvement circulaire avec le détecteur (9), étant équipé d'au moins d'un élément de détection (10) pour la lecture des changements dans la course angulaire du mouvement circulaire **caractérisé en ce, que** l'unité de commande est équipée d'un dispositif de stockage de données comprenant une base de données des valeurs des courses angulaires pour les engrenages individuels, aussi bien qu'au moins un module logiciel d'étalonnage.

5. Système selon la revendication de brevet 4, **caractérisé en ce, qu'**il comprend une unité d'étalonnage équipée d'un dispositif de stockage de données comprenant une base de données avec les valeurs des courses angulaires pour des engrenages individuels et au moins un module logiciel d'étalonnage.

6. Système selon les revendication de brevet 4 ou 5, **caractérisé en ce, qu'**il est équipé au moins d'un élément indicateur (11) pour afficher le rapport d'engrenage actuellement engagé.
